# DEMANDE DE BREVET EUROPEEN

(11) **EP 1 103 414 A1**
(43) Date de publication de la demande: **30.05.2001**
(21) Numéro de dépôt: 00403292.6
(22) Date de dépôt: 24.11.2000
(51) Int. Cl.: B60N 2/50, B60N 2/54

(54) **Suspension pour siège sur un plancher notamment de véhicule automobile, et siège équipé d'une telle suspension**

(30) Priorité: 29.11.1999 FR 9915003
(71) Demandeur: Renault, 92100 Boulogne Billancourt (FR)
(72) Inventeur: Girardi, Philippe, 95410 Groslay (FR)

(57) **Abrégé**

Cette suspension pour siège (1) sur un plancher (9) notamment de véhicule automobile, du type comprenant au moins deux biellettes (5, 7) interposées entre ledit plancher (9) et ledit siège (1) de manière à former un parallélogramme articulé et des moyens élastiques pour rappeler ledit siège (1) vers le haut, est remarquable en ce qu'elle comprend en outre des moyens (R) pour imposer une précontrainte réglable auxdits moyens élastiques.

## Description

La présente invention se rapporte à une suspension pour siège sur un plancher notamment de véhicule automobile, et à un siège équipé d'une telle suspension.

On connaît des documents AU 93 38297 et JP 91 23817 des suspensions pour siège sur un plancher notamment de véhicule automobile, du type comprenant au moins deux biellettes interposées entre ledit plancher et ledit siège de manière à former un parallélogramme articulé et des moyens élastiques pour rappeler ledit siège vers le haut.

Bien que de telles suspensions permettent d'atteindre un niveau de confort tout à fait convenable, elles présentent comme principal inconvénient de donner lieu à un enfoncement du siège qui varie en fonction du poids du conducteur.

Il en résulte que certains conducteurs particulièrement lourds ou légers peuvent se trouver dans des positions de conduite inconfortables, voire même dangereuses pour la sécurité.

Il en résulte également qu'un conducteur donné est condamné à occuper une position de conduite invariable, ce qui peut occasionner une fatigue musculaire lors des trajets de longue durée.

La présente invention a pour but de fournir une suspension du type susmentionné qui ne présente pas ces inconvénients.

On atteint ce but de l'invention avec une suspension pour siège sur un plancher notamment de véhicule automobile, du type comprenant au moins deux biellettes interposées entre ledit plancher et ledit siège de manière à former un parallélogramme articulé et des moyens élastiques pour rappeler ledit siège vers le haut, remarquable en ce qu'elle comprend en outre des moyens pour imposer une précontrainte réglable auxdits moyens élastiques.

Grâce à ces caractéristiques, on obtient une suspension dont on peut régler la précontrainte, ce qui permet d'une part d'ajuster la hauteur du siège au poids du conducteur et, d'autre part, de modifier la hauteur du siège pour un même conducteur.

Suivant d'autres caractéristiques de la suspension selon l'invention:
- lesdits moyens élastiques sont interposés entre ledit plancher et ledit siège,
- lesdits moyens élastiques sont interposés entre ledit plancher et au moins l'une desdites biellettes,
- lesdits moyens élastiques sont interposés entre au moins l'une desdites biellettes et ledit siège,
- lesdits moyens élastiques comprennent un ressort hélicoïdal ou à air, et lesdits moyens pour imposer une précontrainte réglable comprennent des moyens pour régler la longueur d'étirement dudit ressort,
- lesdits moyens élastiques comprennent au moins un organe en matériau élastomère monté coaxialement à l'articulation de l'une desdites biellettes sur ledit siège en étant fixe par rapport à ladite biellette et rotatif par rapport audit siège, et lesdits moyens pour imposer une précontrainte réglable comprennent des moyens pour bloquer sélectivement ledit organe dans une pluralité de positions angulaires prédéterminées par rapport audit siège,
- ledit organe en matériau élastomère est monté fixe sur un axe lui-même monté rotatif sur ledit siège, et lesdits moyens de blocage sélectif comprennent d'une part un bras monté fixe sur ledit axe et s'étendant radialement à partir de celui-ci, et d'autre part des moyens pour immobiliser sélectivement ledit bras dans une pluralité de positions angulaires prédéterminées,
- ledit organe en matériau élastomère a la forme d'une bague enfilée sur ledit axe et entourée par une extrémité de ladite biellette,
- lesdits moyens d'immobilisation sélective dudit bras comprennent d'une part une denture formée sur ce bras et d'autre part un cliquet muni d'une denture complémentaire de celle dudit bras, ce cliquet étant monté pivotant sur ledit siège et étant rappelé contre ledit bras par des moyens élastiques tels qu'un ressort de torsion,
- cette suspension comprend un palonnier monté rotatif sur ledit siège, ce palonnier comprenant une partie formant levier d'actionnement et une partie formant came agencées de manière que lors d'une rotation dudit palonnier dans un sens approprié, ladite partie formant came puisse écarter ledit cliquet dudit bras,
- ladite partie formant came est munie d'un pion coopérant avec une rainure formée dans ledit bras de manière que lors d'une rotation dudit palonnier dans un sens opposé audit sens approprié, ledit pion puisse faire pivoter ledit bras dans un sens qui augmente la précontrainte dudit organe en matériau élastomère,
- ledit palonnier est monté sur ledit siège coaxialement audit axe,
- des moyens élastiques tels qu'un ressort de traction sont interposés entre ledit siège et ledit palonnier de manière à rappeler ce dernier dans un sens opposé audit sens approprié,
- lesdits moyens d'immobilisation sélective comprennent un taquet monté sur ledit bras et susceptible de coopérer avec une pluralité de crans d'indexation formés sur ledit siège.

La présente invention concerne également un siège notamment pour véhicule automobile, remarquable en ce qu'il est équipé d'une suspension conforme à ce qui précède.

D'autres caractéristiques et avantages de la présente invention apparaîtront à la lecture de la description qui va suivre et à l'examen du dessin annexé, dans lequel:
- la figure 1 est une vue en perspective d'un siège équipé de la suspension selon l'invention,
- la figure 2 est une vue partielle de côté du siège de la figure 1,
- la figure 3 est une vue en coupe de ce siège selon la ligne III-III de la figure 2, et
- la figure 4 est une vue analogue à celle de la figure 3 lorsque la suspension selon l'invention est exécutée selon un autre mode de réalisation.

Sur ces figures, des références identiques désignent des organes ou ensembles d'organes identiques ou analogues.

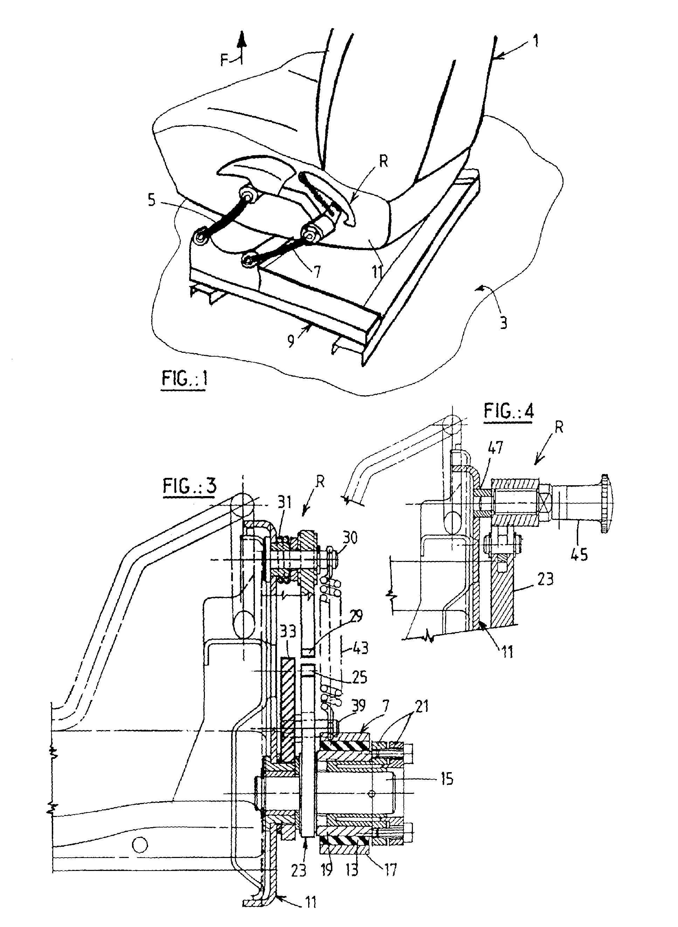

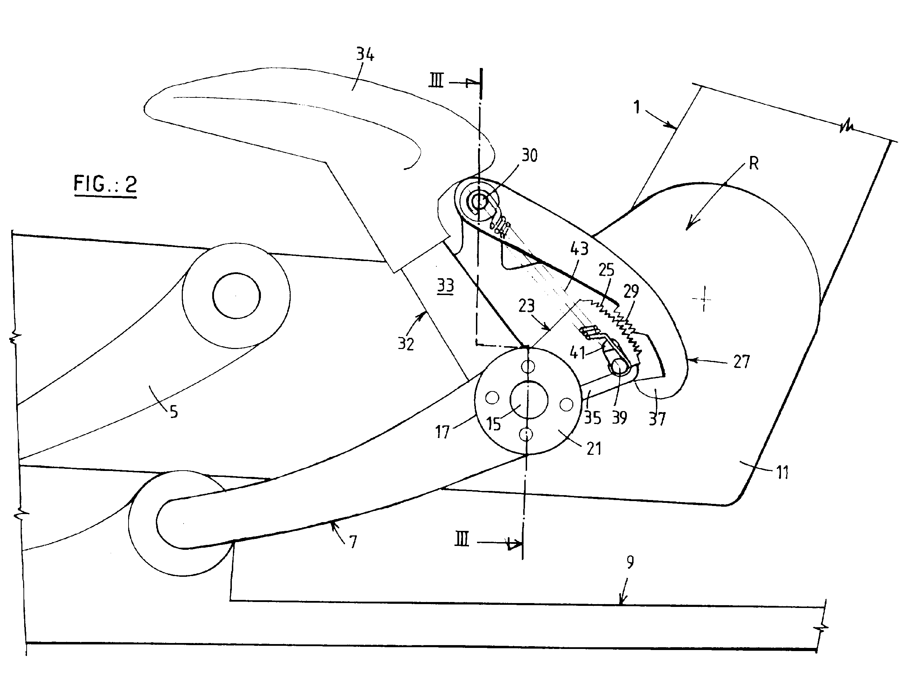

On se reporte à présent à la figure 1, sur laquelle on a représenté un siège 1 de véhicule automobile suspendu au moyen de la suspension selon l'invention sur le plancher 3 de ce véhicule.

Bien que l'on ait choisi de décrire cette suspension dans le cas particulier où elle équipe un siège de véhicule automobile, il faut garder à l'esprit que cette suspension pourrait équiper n'importe quel autre type de siège, tel qu'un siège d'engin agricole ou de tondeuse à gazon.

Cette suspension comprend de préférence deux paires de biellettes situées de part et d'autre du siège 1, une seule 5, 7 de ces paires étant visible sur la figure.

On peut envisager en variante une seule paire de biellettes disposée de manière centrale par rapport au siège 1.

Chacune de ces deux paires de biellettes forme, avec un cadre de liaison 9 avec le plancher 3 d'une part et avec la structure 11 du siège 1 d'autre part, un parallélogramme articulé.

Cette suspension comprend des moyens pour rappeler élastiquement le siège 1 vers le haut (c'est à dire dans le sens de la flèche F), non visibles sur la figure 1 mais qui vont être détaillés dans ce qui suit.

Par ailleurs, selon une caractéristique essentielle de l'invention, cette suspension comprend des moyens R pour imposer une précontrainte réglable à ces moyens élastiques de rappel.

On se reporte à présent aux figures 2 et 3 sur lesquelles les moyens élastiques de rappel et les moyens R susmentionnés apparaissent clairement.

Ces moyens sont représentés en association avec la biellette 7 susmentionnée, mais il va de soi qu'ils pourraient coopérer avec l'une quelconque des autres biellettes, voire même avec plusieurs de ces biellettes.

Comme on peut le voir sur la figure 3, les moyens élastiques de rappel comprennent un organe en matériau élastomère 13 monté coaxialement à l'articulation de la biellette 7 sur la structure 11 du siège 1.

Cet organe 13 a sensiblement la forme d'une bague enfilée sur un axe 15 monté rotatif sur ladite structure, et entourée par une partie d'extrémité 17 de la biellette 7.

Cette bague 13 est maintenue solidaire en rotation de l'axe 15 par exemple à l'aide d'un dispositif de couplage connu de l'homme du métier comprenant un collier 19 et un coupleur 21.

D'autre part, cette bague 13 est maintenue solidaire en rotation de la partie d'extrémité 17 de la biellette 7 par exemple par collage.

En variante, l'organe en matériau élastomère 13, l'axe 15 et la partie d'extrémité 17 de la biellette 7 pourraient avoir des sections carrées, comme cela est enseigné dans le document AU 93 38297 susmentionné.

Les moyens R comprennent un bras 23 monté fixe sur l'axe 15 et s'étendant radialement à partir de celui-ci, et des moyens pour immobiliser sélectivement ce bras dans une pluralité de positions angulaires prédéterminées.

Dans un premier mode de réalisation, ces moyens d'immobilisation comprennent d'une part une denture 25 formée sur ce bras 23 (voir figure 2), et d'autre part un cliquet 27 muni d'une denture 29 complémentaire de celle du bras 23.

Ce cliquet est monté pivotant sur la structure 11 du siège 1 autour d'un axe 30 et il est rappelé contre le bras 23 par des moyens élastiques tels qu'un ressort de torsion 31 centré sur l'axe 30 (voir figure 3).

La forme des dentures 25 et 29 est conçue de manière à empêcher le bras 23 de pivoter dans le sens horaire, et à permettre à ce bras de pivoter dans le sens anti-horaire (voir figure 2).

Un palonnier 32 est monté rotatif sur la structure 11 de préférence coaxialement à l'axe 15.

Ce palonnier 32 comprend une partie formant levier d'actionnement 33, de longueur relativement importante, surmontée d'une poignée 34, et une partie formant came 35, de longueur relativement faible, solidaire de la partie 33 et agencée de manière que lors d'une rotation du palonnier 32 dans le sens horaire, ladite partie 35 coopère avec une extension 37 du cliquet 27 de manière à écarter ce dernier du bras 23 (situation représentée sur la figure 2).

La partie formant came 35 est de préférence munie d'un pion 39 coopérant avec une rainure 41 formée dans le bras 23 de manière qu'une rotation du palonnier 32 dans le sens anti-horaire ait pour effet d'entraîner également le bras 23 dans ce même sens de rotation.

Des moyens élastiques tels qu'un ressort de traction 43 sont de préférence interposés entre le pion 39 et l'axe 30 de manière à rappeler le palonnier 32 dans le sens anti-horaire.

Dans un autre mode de réalisation représenté à la figure 4, les moyens d'immobilisation sélective du bras 23 comprennent un taquet 45 monté sur ce bras et susceptible de coopérer avec une pluralité de crans d'indexation 47 formés sur la structure 11 du siège 1.

Le mode de fonctionnement et les avantages de la suspension selon l'invention résultent directement de la description qui précède.

Les biellettes 5, 7 assurent un déplacement du siège 1 parallèlement au plancher 3.

Dans le premier mode de réalisation, lorsque le cliquet 27 est en appui contre le bras 23 de manière que les dentures 25 et 29 coopèrent entre elles, le bras 23 est immobilisé et l'axe 15 est bloqué en rotation par rapport à la structure 11 du siège 1.

Dans cette configuration, la bague en matériau élastomère 13 est également bloquée par rapport à la structure 11, et elle exerce sur la biellette 7 un couple de torsion qui a pour effet de maintenir le siège 1 (supportant éventuellement un conducteur) dans une position d'équilibre au-dessus du plancher 3.

En cas de secousses, le siège 1 oscille autour de cette position d'équilibre, assurant ainsi l'effet de suspension souhaité.

Si, à partir de cette position d'équilibre, on souhaite modifier la hauteur du siège 1 par rapport au plancher 3, on agit sur les moyens R de la manière suivante.

Pour faire monter le siège 1, on pousse sur la poignée 34 vers le bas de manière à faire pivoter le palonnier 32 dans le sens anti-horaire.

Ce faisant, le pion 39 coopère avec la rainure 41 formée dans le bras 23 de manière à faire pivoter ce dernier également dans le sens anti-horaire, le cliquet 27 s'écartant alors du bras 23 grâce à la forme appropriée des dentures 25 et 29.

Sous l'effet de la rotation du bras 23, l'axe 15 pivote également dans le sens anti-horaire, ce qui a pour effet d'augmenter la précontrainte de la bague en matériau élastomère 13, et ainsi d'augmenter le couple de rappel que cette dernière exerce sur la biellette 7, entraînant ainsi le déplacement du siège 1 vers le haut jusqu'à ce qu'il atteigne une nouvelle position d'équilibre.

Une fois obtenue la hauteur souhaitée, on lâche la poignée 34, et le bras 23 est maintenu dans la position angulaire correspondante grâce au cliquet 27.

Pour faire descendre le siège 1, on tire la poignée 34 vers le haut de manière à faire pivoter le palonnier 32 dans le sens horaire.

Ce faisant, la partie formant came 35 vient pousser l'extension 37 du cliquet 27 de manière à écarter ce dernier du bras 23, autorisant ainsi une rotation du bras 23 et de l'axe 15 dans le sens horaire.

Cette rotation permet de libérer une partie de la précontrainte de la bague en matériau élastomère 13, et ainsi de diminuer le couple de rappel que cette dernière exerce sur la biellette 7, ce qui a pour effet de déplacer le siège 1 vers le bas.

Une fois obtenue la hauteur souhaitée, on lâche la poignée 34. Le ressort de traction 43 éloigne alors la partie formant came 35 de l'extension 37 du cliquet 27, ce qui permet à ce dernier de revenir en appui contre le bras 23, et ainsi de bloquer ce bras dans la position angulaire correspondant au réglage souhaité.

Dans le deuxième mode de réalisation, on fait pivoter le bras 23 et on le bloque dans les positions angulaires correspondant aux réglages souhaités en utilisant le taquet 45 que l'on vient positionner sélectivement dans les crans d'indexation 47.

Comme on peut le comprendre à présent, la suspension selon l'invention comprend des moyens permettant de régler sa précontrainte de manière relativement simple.

Grâce à ces moyens, on peut d'une part ajuster la hauteur du siège au poids du conducteur et, d'autre part, modifier la hauteur du siège pour un même conducteur.

Bien entendu, la présente invention n'est nullement limitée aux modes de réalisation décrits et représentés, fournis à titre purement illustratif.

C'est ainsi par exemple que les moyens élastiques de rappel du siège vers le haut pourraient comprendre au moins un ressort hélicoïdal ou à air interposé entre le plancher 3 et le siège 1, ou entre ce plancher et au moins l'une des biellettes 5, 7, ou encore entre l'une de ces biellettes et le siège 1.

Dans ce cas, les moyens R pourraient comprendre des moyens pour régler la longueur d'étirement de ce ressort.

## Revendications

1. Suspension pour siège (1) sur un plancher (3) notamment de véhicule automobile, du type comprenant :
- au moins deux biellettes (5, 7) interposées entre ledit plancher (3) et ledit siège (1) de manière à former un parallélogramme articulé,
- des moyens élastiques (13) interposés entre au moins l'une desdites biellettes (5, 7) et ledit siège pour rappeler ledit siège (1) vers le haut, et
- des moyens (R) pour imposer une précontrainte réglable auxdits moyens élastiques (13),
caractérisée en ce que lesdits moyens élastiques comprennent au moins un organe en matériau élastomère (13) monté coaxialement à l'articulation de l'une (7) desdites biellettes (5, 7) sur ledit siège (1) en étant fixe par rapport à ladite biellette (7) et rotatif par rapport audit siège (1), et en ce que lesdits moyens (R) pour imposer une précontrainte réglable comprennent des moyens (23, 27) pour bloquer sélectivement ledit organe (13) dans une pluralité de positions angulaires prédéterminées par rapport audit siège (1).

2. Suspension selon la revendication 1, caractérisée en ce que ledit organe en matériau élastomère (13) est monté fixe sur un axe (15) lui-même monté rotatif sur ledit siège (1), et en ce que lesdits moyens de blocage sélectif comprennent d'une part un bras (23) monté fixe sur ledit axe (15) et s'étendant radialement à partir de celui-ci, et d'autre part des moyens (25, 27, 29) pour immobiliser sélectivement ledit bras (23) dans une pluralité de positions angulaires prédéterminées.

3. Suspension selon la revendication 2, caractérisée en ce que ledit organe en matériau élastomère (13) a la forme d'une bague enfilée sur ledit axe (15) et entourée par une extrémité (17) de ladite biellette (7).

4. Suspension selon l'une des revendications 2 ou 3, caractérisée en ce que lesdits moyens d'immobilisation sélective dudit bras (23) comprennent d'une part une denture (25) formée sur ce bras et d'autre part un cliquet (27) muni d'une denture (29) complémentaire de celle dudit bras (23), ce cliquet étant monté pivotant sur ledit siège (1) et étant rappelé contre ledit bras (23) par des moyens élastiques tels qu'un ressort de torsion (31).

5. Suspension selon la revendication 4, caractérisée en ce qu'elle comprend un palonnier (32) monté rotatif sur ledit siège (1), ce palonnier comprenant une partie formant levier d'actionnement (33) et une partie formant came (35) agencées de manière que lors d'une rotation dudit palonnier (32) dans un sens approprié, ladite partie formant came (35) puisse écarter ledit cliquet (27) dudit bras (23).

6. Suspension selon la revendication 5, caractérisée en ce que ladite partie formant came (35) est munie d'un pion (39) coopérant avec une rainure (41) formée dans ledit bras (23) de manière que lors d'une rotation dudit palonnier (32) dans un sens opposé audit sens approprié, ledit pion (39) puisse faire pivoter ledit bras (23) dans un sens qui augmente la précontrainte dudit organe en matériau élastomère (13).

7. Suspension selon l'une des revendications 5 ou 6, caractérisée en ce que ledit palonnier (32) est monté sur ledit siège (1) coaxialement audit axe (15).

8. Suspension selon l'une quelconque des revendications 5 à 7, caractérisée en ce que des moyens élastiques tels qu'un ressort de traction (43) sont interposés entre ledit siège (1) et ledit palonnier (32) de manière à rappeler ce dernier dans un sens opposé audit sens approprié.

9. Suspension selon l'une des revendications 2 ou 3, caractérisée en ce que lesdits moyens d'immobilisation sélective comprennent un taquet (45) monté sur ledit bras (23) et susceptible de coopérer avec une pluralité de crans d'indexation (47) formés sur ledit siège (1).

10. Siège (1) notamment pour véhicule automobile, caractérisé en ce qu'il est équipé d'une suspension conforme à l'une quelconque des revendications précédentes.
